# EUROPEAN PATENT SPECIFICATION

(11) **EP 2 877 888 B1**
(45) Date of publication and mention of the grant of the patent: **06.09.2023**
(21) Application number: 12742861.3
(22) Date of filing: 25.07.2012
(51) Int. Cl.: G02B 6/44

(54) **INSTALLATION OF A DROP CABLE FOR AN OPTICAL ACCESS NETWORK**
INSTALLATION EINES ANSCHLUSSKABELS FÜR EIN OPTISCHES ZUGANGSNETZ
INSTALLATION D'UN CÂBLE DE DÉRIVATION POUR UN RÉSEAU D'ACCÈS OPTIQUE

(43) Date of publication of application: 03.06.2015
(73) Proprietor: Prysmian S.p.A., 20126 Milano (IT)
(72) Inventor: ABBIATI, Fabio, I-20126 Milano (IT); LE DISSEZ, Arnaud, I-20126 Milano (IT); GRIFFITHS, Ian, I-20126 Milano (IT)
(74) Representative: Pietra, Giulia
(86) International application number: PCT/EP2012/064578
(87) International publication number: WO 2014/015902

(56) References cited:
- EP-A1- 1 557 707
- EP-A1- 2 365 364
- WO-A1-00/28364
- US-A- 5 280 556
- US-B1- 6 856 748

## Description

### Technical field

The present invention relates to the field of optical access networks. In particular, the present invention relates to a method for installing a drop cable for an optical access network. Further, the present invention relates to an optical termination assembly comprising a drop cable for an optical access network.

### Background art

FTTH (Fiber To The Home) network is an optical access network providing a number of end users with communication services, e.g. with services requiring data transmission at a rate of some hundreds of Mbit/s or more.

Typically, FTTH network comprises a distribution cabinet located in the basement of the building where the end users reside and an optical cable (that is usually termed "riser cable") exiting the distribution cabinet. Typically, the riser cable vertically runs through the building from the basement up to all the building floors.

At each floor of the building, one or more optical cables (usually termed "drop cables") may branch off from the riser cable. The optical connection between the riser cable and the drop cable(s) is typically housed in a so-called riser box. Each drop cable has a first end housed in a so-called termination box located at the user's premises and a second end optically connected to the riser cable within the riser box.

The first end of the drop cable is typically preconnectorized, namely at least one optical fiber of the drop cable is connected to an optical connector, the operation of connecting the at least one optical fiber to the optical connector being performed by the manufacturer. Conveniently, the manufacturer assembles the preconnectorized first end with a termination box which is then closed (and possibly sealed to avoid unwelcome opening) and sold to network operators for successive installation at the user's premises.

A typical installation procedure provides for positioning and fixing the preconnectorized first end of the drop cable, suitably already housed in the termination box, at the user's premises, for instance in proximity of a set-top box. Then, the second end of the drop cable is typically inserted within a duct leading from the user's premises to the riser box. The second end of the drop cable is pulled through the duct, until it is brought close to the riser box where an optical connection is made between the optical fiber(s) of the drop cable and corresponding optical fiber(s) of the riser cable.

The optical connection between drop cable and riser cable may be carried out in different ways, depending on whether the second end of the drop cable is non-preconnectorized or preconnectorized.

In the first case, after the non-preconnectorized second end of the drop cable is brought in proximity of the riser box, possible extra-length of the cable is cut and the optical fiber(s) of the drop cable are spliced with corresponding optical fiber(s) of the riser cable.

In the second case, after the preconnectorized second end of the drop cable is brought in proximity of the riser box, the preconnectorized optical fiber(s) of the drop cable are connected to corresponding preconnectorized optical fiber(s) of the riser cable through corresponding mechanical adapter(s). This latter case is advantageous in that no splicing has to be done during installation, which is a time-consuming and critical step. However, possible extra-length of the drop cable may not be cut and shall accordingly be suitably accommodated between the riser box and the termination box.

WO 2011/076275 (in the name of the same Applicant) describes an optical termination assembly comprising a termination box and a drop cable, the termination box comprising a compartment where the operator may arrange possible extra-length of the drop cable during installation.

US 2008/0131067 describes a preconnectorized network interconnection apparatus including a housing, a cable storage tray movably attached to the housing and a predetermined length of preconnectorized cable maintained on the cable storage tray.

US 2011/0293234 describes a cable storage unit including a casing and a removable mounting plate which is removably mounted onto the casing, wherein a cable storage area is formed between the back surface of the removable mounting plate and the inside surface of the casing. The back surface of the removable mounting plate is provided with storage brackets which form a cable management loop and which hold a coil or spool of jacketed cable.

US 7,346,253 describes a slack storage receptacle for storing an excess length of a preconnectorized drop cable, which comprises a housing and storage means disposed within the housing for receiving the drop cable. The slack storage receptacle may be secured to an exterior wall of the subscriber's premises with the NID (network interface device) mounted thereon. The drop cable slack may be wound onto the storage means after deployment.

EP 2 365 364 describes a terminal enclosure comprising an extractable fiber organizer tray comprising a splicing portion, a fiber connector mounting portion and portions for storing an entering jacketed cable as well as the fibers of the stripped portion of the cable.

### Summary of the invention

The Applicant has noticed that, in order to accommodate the extra-length of the drop cable in anyone of the boxes described by the above cited documents, the extra-length of the drop cable is wound to form a coil, whose minimum diameter depends on the minimum bending radius of the drop cable.

As known, the minimum bending radius of an optical cable is the minimum radius at which the cable may be bent without causing permanent damages to the cable itself or inducing unacceptable performance degradation of the optical fibers housed therein. The minimum bending radius depends on the cable type, in particular on the type of optical fibers contained in the cable and on the cable structure. Typically, an optical drop cable has a minimum bending radius typically of from 15 cm to 20 cm. Hence, the coiled drop cable extra-length typically has a diameter ranging from 30 cm to 40 cm.

In order to be suitable for housing the coiled drop cable extra-length, the boxes described by the above cited documents shall be larger than the minimum diameter of the coiled drop cable extra-length. Such boxes are accordingly bulky and therefore are not compliant with the requirements on devices for FTTH networks, which shall be as compact as possible to ease their installation in often narrow spaces at the user's premises and to minimize their aesthetic impact.

In view of the above, the Applicant has tackled the problem of providing a method for installing a drop cable, especially when preconnectorized at both ends thereof, for an optical access network, which overcomes the aforesaid drawbacks.

In particular, the Applicant has tackled the problem of providing a method for installing a drop cable for an optical access network, wherein possible extra-length of the drop cable may be stored in a box whose size is small enough to comply with the requirements on devices for FTTH networks.

The Applicant has observed that the minimum bending radius of a cable is determined to a significant extent by the external layers of the cable which, when coiled on a relatively small radius, may be subjected to permanent damages and transmit mechanical stresses to the enclosed optical fibers, thereby deteriorating their performances.

The Applicant found that the bending radius of a drop cable could be decreased - thus decreasing the size of the box enclosing possible extra-length thereof - by removing at least one of the outer layers surrounding the optical fibers of the drop cable. Such a removal does not bring damages to the coiled, bared extra-length.

Indeed, the bending losses of the optical fibers comprised in a bent cable are mainly due to mechanical stresses exerted on the optical fibers by the outer layer(s) of the bent cable. By removing one or more of such outer layers, the bending loss component due the mechanical stresses exerted by the removed outer layer(s) of the cable is avoided, thereby allowing bending the remaining portions of the cable at a much narrower bending radius (about 1/10 the minimum bending radius of the complete cable). This allows coiling the bared portion of drop cable extra-length, free from the outer layer(s), with a significantly reduced diameter. The coiled portion of drop cable extra-length may accordingly be accommodated in a storage box of a compact size fitting the dimensional and aesthetical requirements on devices for FTTH networks.

The Applicant has also observed that the storage box provides satisfactory protection to the coiled optical fibers or optical modules (buffer tubes loosely housing one or more optical fibers).

According to a first aspect, the present invention relates to a method for installing a drop cable for an optical access network in a building, the drop cable having a first end, a second end and a first minimum bending radius, the drop cable comprising at least one optical fiber and one or more layers surrounding the optical fiber, the method comprising:
a) laying the drop cable so that the first end is housed in a termination box placed at a first position at user's premises within the building and the second end is brought to a second position close to a riser cable within the building;
b) collecting an extra-length of the drop cable at a third position intermediate between the first position and the second position;
c) removing at least one of the layers from a portion of the extra-length of the drop cable; and
d) coiling the portion with a bending radius smaller than the first minimum bending radius,
the method further comprising placing a storage box at the third position and accommodating the coiled portion in the storage box.

Profitably, at step d) the bending radius is substantially 1/10 of the first minimum bending radius.

According to advantageous embodiments, step c) comprises cutting one of the layers at a longitudinal position, accessing a rip cord housed in said layer and pulling the rip cord thereby longitudinally slicing the layer for a length substantially equivalent to the extra-length of the drop cable.

As a result of step c), the portion with a bending radius smaller than the first minimum bending radius can be one or more optical fibers optionally loosely contained, alone or in combination, in one or more buffer tubes.

According to a second aspect, the present invention relates to an optical access network comprising an optical termination assembly, a riser cable and a riser box, the optical termination assembly comprising:
- a termination box to be placed at a first position at user's premises;
- a drop cable comprising at least one optical fiber and one or more layers surrounding the optical fiber, the drop cable having a first end housed in the termination box, a second end placed in a second position close to a riser cable and a first minimum bending radius, the second end of the drop cable being connected to the riser cable within the riser box; and
- a storage box placed in a third position intermediate between the first position and the second position,
wherein the drop cable comprises an extra-length lacking, in at least one portion thereof, of at least one of the one or more layers, the portion being coiled in the storage box with a bending radius smaller than the first minimum bending radius.

Preferably, the drop cable comprises at least one preconnectorized end. As "preconnectorized end" it is meant that the end of each optical fiber is connected to an optical connector. Each connector is advantageously factory mounted.

More preferably, the first end of the drop cable is preconnectorized. Even more preferably, the first end of the drop cable is inserted in the termination box before deploying of the drop cable (e.g. at the manufacturing stage).

Preferably, also the second end of the drop cable is preconnectorized.

More preferably, the second end of the drop cable is provided with an optical connector having an outer diameter not larger than an external diameter of the drop cable.

Profitably, the drop cable further comprises a buffer tube loosely housing the optical fiber so as to form an optical module, the optical module having a second minimum bending radius.

Preferably, the second minimum bending radius is smaller than the first minimum bending radius.

More preferably, the second minimum bending radius is substantially 1/10 of the first minimum bending radius.

According to advantageous variants, the storage box has its larger dimension substantially equal to the double of the second minimum bending radius.

Preferably, the drop cable further comprises at least one rip cord arranged between the optical fiber and the at least one of the layers for easing removal of the at least one of the layers.

In the present description and claims, as layer is meant a thickness of material arranged in continuous or discontinuous manner. A layer can be a cable component external to the optical fiber or to the optical module, for example a sheath, optionally including strength members embedded therein, or yarns provided to substantially surround the optical fibers or the optical module(s).

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

### Brief description of the drawings

Embodiments of the present invention will be better understood by reading the following detailed description, to be read by referring to the accompanying drawings, wherein:
- Figure 1 is a schematic view of an optical termination assembly according to an embodiment of the present invention;
- Figure 2 is a cross-section view of the drop cable of Figure 1 ;
- Figure 3 is a schematic view of the optical termination assembly installed according to an embodiment of the present invention; and
- Figure 4 shows a particular of the optical termination assembly installed according to an embodiment of the present invention.

### Detailed description of preferred embodiments of the invention

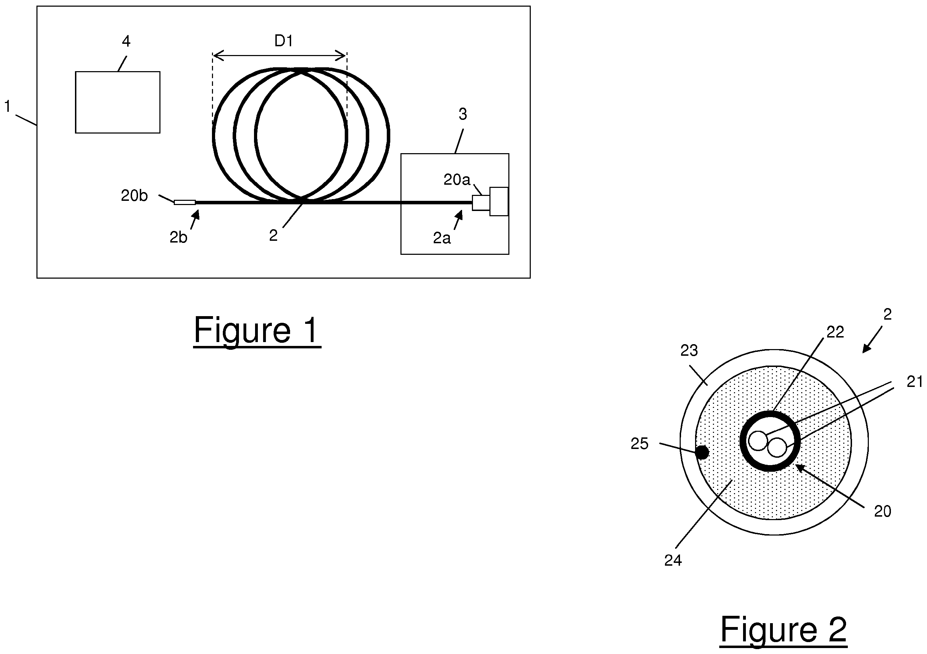

Figure 1 schematically shows an optical termination assembly 1 which comprises a drop cable 2, a termination box 3 and a storage box 4.

As from Figure 2, the drop cable 2 comprises, for example, an optical module 20 comprising two optical fibers 21 and a buffer tube 22 in which the optical fibers 21 are loosely housed.

The optical module 20 can have an external diameter smaller than 1.2 mm, more preferably smaller than 1 mm. According to a preferred embodiment, the optical module 20 has an external diameter equal to about 900 microns.

The optical module 20 can have a minimum bending radius smaller than 50 mm, more preferably smaller than 20 mm. According to a particularly advantageous embodiment, the optical module 20 comprises bend-insensitive single-mode optical fibers 21 compliant with ITU-T Recommendation G.657 (11/2009), category A. In such case, the bending radius of the optical module 20 is equal to about 10 mm.

The drop cable 2 further comprises an external sheath 23. The external sheath is preferably a LSZH (Low Smoke Zero Halogen) sheath. The external diameter of the external sheath 23 is preferably of from 2 mm to 6 mm, more preferably from 3 mm to 5 mm. According to a particularly advantageous embodiment, the external sheath 23 has an external diameter of about 4 mm. The thickness of the external sheath 23 can be of from 0.3mm to 1 mm, for example of 0.5 mm.

The LSZH sheath material can be based on a polymeric material charged with flame retardant inorganic filler. Examples of polymeric material suitable for the present sheath are polyethylene; polypropylene; ethylene propylene copolymers; ethylene-propylene-diene copolymers (EPDM); copolymer of ethylene and/or propylene with other copolymerizable monomers such as ethylene-1-butylene copolymer, ethylene-vinyl acetate copolymer (EVA), ethylene-methyl acrylate copolymer (EMA), ethylene-butyl acrylate copolymer (EBA), ethylene-ethyl acetate copolymer (EEA); or mixtures thereof. Suitable flame-retardant inorganic fillers can be selected, for example, from hydroxides, hydrated oxides, salts or hydrated salts of metals. The inorganic filler may be advantageously used in the form of coated particles. Preferred coating materials are saturated or unsaturated fatty acids containing from 8 to 24 carbons.

The space between the outer surface of the optical unit 20 (in particular, the buffer 22) and the inner surface of the external sheath 23 is preferably filled with yarns 24, for instance aramid yarns, provided among the optical units 20.

The drop cable 2 can further comprise a rip cord 25 housed in the external sheath 23. The rip cord 25 is preferably arranged close to the inner surface of the external sheath 23. The rip cord 25 is preferably embedded in the yarns 24. According to an alternative embodiment not shown in the drawings, the drop cable 2 comprises two rip cords arranged close to the inner surface of the external sheath 23 at diametrically opposed positions.

The drop cable 2 preferably has a minimum bending radius comprised between 10 cm and 20 cm.

The drop cable 2 preferably has a predefined length of some tens of meters, for instance 30 m or 50 m.

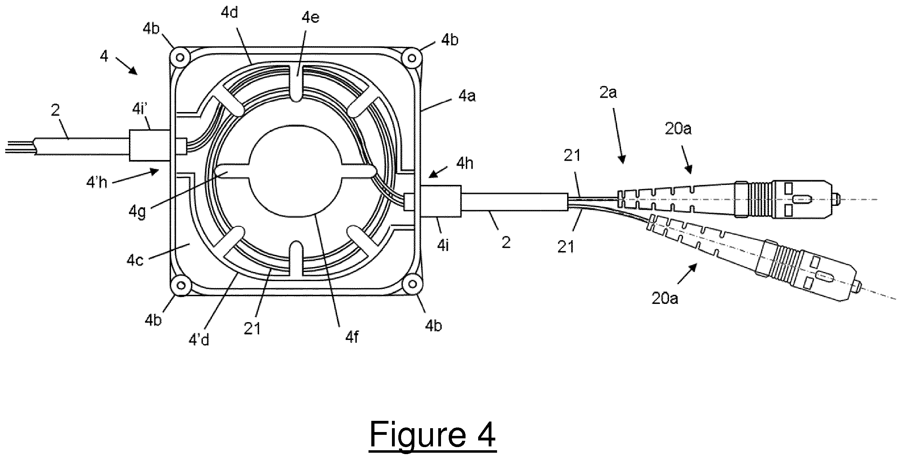

The drop cable 2 is preferably preconnectorized. In particular and with reference to the schematic illustration of Figure 1, a first optical connector 20a is provided for each optical fiber 21 at a first end 2a of the drop cable 2 (detailed in Figure 4), whereas a second optical connector 20b is provided for each the optical fibers 21 at a second end 2b of the drop cable 2 (a single first optical connector 20a and a single second optical connector 20b are shown in Figure 1 for not overloading the drawing).

Each first optical connector 20a may be an optical connector of any known type, for instance standard connector/physical contact (SC/PC), standard connector/angled physical contact (SC/APC), lucent connector/ physical contact (LC/PC), lucent connector/angled physical contact (LC/APC) and so on. According to a particularly advantageous embodiment, the first optical connector 20a is an SC/APC connector.

Each second optical connector 20b preferably has an outer diameter not larger than the external diameter of the drop cable 2 (namely, of the external sheath 23). Further, preferably, the second optical connector 20b has a shape optimized for easing the pulling of the second end 2b of the drop cable 2 through a duct. For instance, the second optical connector 20b may have a rounded shape, in particular an ogival shape. According to a particularly advantageous embodiment, the second optical connector 20b preferably is a miniconnector, such as for instance a VerTV^{™} optical connector produced and sold by the same Applicant.

The first end 2a of the drop cable 2 with the first optical connector 20a is housed within the termination box 3. In particular, a sidewall of the termination box has an opening engaged by a supporting frame (not visible in the drawings). The supporting frame is suitable for receiving the first optical connector 20a from the interior of the box and to firmly support it so that its end is accessible from the exterior of the termination box 3. This allows connecting a user equipment (for instance, a set-top box, a PC or the like) to the first optical connector 20a. Preferably, the first end 2a of the drop cable 2 with the first optical connector 20a is inserted in the termination box 3 by the manufacturer who assembles the optical termination assembly 1. The termination box 3 may also be sealed by the manufacturer.

As shown in more detail in Figure 4, the storage box 4 preferably comprises four sidewalls 4a and a back wall 4c. The storage box 4 is further provided with anchoring points 4b arranged at the corners formed by the sidewalls 4a, for securing the box 4 to, for example, a wall. Advantageously, the storage box 4 further comprises a cover (not illustrated), optionally hinged to one of the sidewalls 4a. Curved containment walls 4d, 4'd protrude from the back wall 4c and are endowed with a plurality of first fins 4e extending from the upper edge of the containment walls 4d, 4'd towards the center of the storage box 4. A storage member (for instance, a mandrel) 4f suitable for receiving at least one portion of the extra-length of the drop cable 2 is preferably arranged at a central portion of the back wall 4c. The storage member 4f is endowed of at least two second fins 4g extending from the upper edge of the storage member 4f towards the sidewalls 4a. Two opposite sidewalls 4a are provided with respective ports 4h, 4'h for the passage of the cable 2. The edges of the containment walls 4d, 4'd are substantially in contact with such two opposite sidewalls 4a so to be at the side of the ports 4h, 4'h. Each port 4h, 4'h is provided with a respective sleeve 4i, 4i'.

The optical termination assembly 1 is preferably packaged by the manufacturer in a disposable box (e.g. a carton), which is provided to an operator responsible of performing the installation. In particular, for packaging purposes, the drop cable 2 is preferably wound to form a coil, whose minimum diameter D1 (see Figure 1) depends on the minimum bending radius of the drop cable 2. If the drop cable 2 has a minimum bending radius comprised between 10 cm and 20 cm, the diameter D1 of the coiled drop cable 2 is comprised between 20 cm and 40 cm.

The optical termination assembly 1 may be installed by an operator for connecting an end user to a riser cable 6 vertically running through the building where the end user resides, as it will be described in detail herein after.

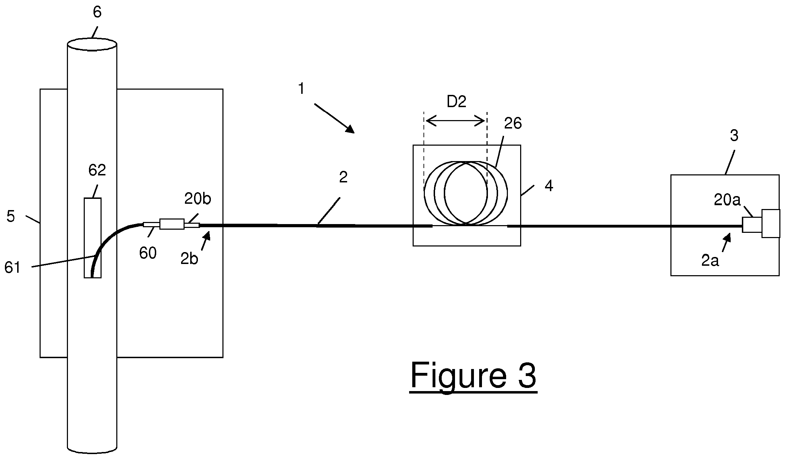

In a first installation step, the operator can place the termination box 3 with the preconnectorized first end 2a of the drop cable 2 housed therein at the user's premises. For instance, the termination box 3 may be fixed to a wall of the end user's apartment, in proximity of the opening of a duct (not shown in Figure 3) leading from the end user's apartment to a riser box 5 placed at the same floor. To this purpose, the termination box 3 is preferably provided with one or more fixing elements allowing the operator to fix the termination box 3 without opening it.

Then, the operator can insert the preconnectorized second end 2b of the drop cable 2 in the opening of the duct and pull it through the duct until it reaches the riser box 5 and riser cable 6. The operation of pulling the second end 2b of the drop cable 2 through the duct is advantageously eased by the fact that the second optical connector 20b has a diameter not larger than the diameter of the drop cable 2. The preconnectorized second end 2b of the drop cable 2 may accordingly be pulled within the duct without any additional difficulty, because the second optical connector 20b has substantially the same diameter of the cable.

After the preconnectorized second end 2b of the drop cable 2 reaches the riser box 5, the operator may then perform the optical connection between drop cable 2 and riser cable 6. In particular, the operator mechanically couples the second optical connector 20b of the drop cable 2 to a corresponding optical connector 60 which terminates an optical fiber 61 exiting the riser cable 6 through a window 62 cut in its external sheath. The operator mechanically couples the second optical connector 20b with the optical connector 60 preferably by means of a suitable adapter comprising two opposed sleeves, each sleeve being conformed to receive a respective optical connector. The mechanical coupling between the second optical connector 20b and the optical connector 60 implements an optical coupling between the optical fiber 21 of the drop cable 2 and the optical fiber 61 of the riser cable 6.

The operator suitably iterates the above described operation for each optical fiber of the drop cable 2, thereby optically connecting each optical fiber of the drop cable 2 to a respective optical fiber of the riser cable 6. Advantageously, the operator does no have to make any splice for connecting the drop cable 2 to the riser cable 6. This is profitable because splicing optical fibers is a time-consuming and critical step which requires care and expertise by the operator.

The operator then preferably arranges the optical connection between drop cable 2 and riser cable 6 in a suitable housing of the riser box 5.

Since the distance between the location of the termination box 3 and the riser box 5 is not known *a priori,* while (as mentioned above) the length of the drop cable 2 as provided by the manufacturer to the operator is predetermined, an extra-length of the drop cable 2 may be left. For instance, if the distance between the termination box 3 and the riser box 5 is 20 meters and the predefined length of the drop cable 2 is 30 meters, an extra-length of 10 meters is left.

According to the invention, in order to accommodate such extra-length, the operator can select a suitable location for setting the storage box 4, at an intermediate position between the riser box 5 and the termination box 3. The operator then places the storage box 4 in the selected location and fixes it by the anchoring points 4b. Since, as it will be discussed in detail herein after, the storage box 4 is very compact in size, the location for positioning the storage box 4 may be advantageously easily found, as a limited space is sufficient for accommodating it.

The operator then collects the extra-length of the drop cable 2 in proximity of the storage box 4, and removes one or more layers surrounding the optical fiber 21 of the drop cable 2 from at least a portion 26 of the extra-length of the drop cable 2, in the present example the external sheath 23 and the yarns 24 being removed. The optical module 21 is thus bared for at least a portion 26 of the extra-length of the drop cable 2.

The sheath removal can be accomplished by cutting the external sheath 23 of the drop cable 2 so as to open a window and to access the rip cord 25. Then, the operator pulls the rip cord 25 so as to longitudinally slice the external sheath 23 and easily remove it. Once the external sheath 23 is removed from the portion 26 of the drop cable extra-length, the yarns 24 may be also cut using, for example, heavy-duty scissors.

Once bared, the portion 26 of the drop cable extra-length can be wound to form a coil which is finally stored in the storage box 4 around the storage member 4f (as shown in Figures 3 and 4).

Preferably, the portion 26 of the drop cable extra-length is wound at a bending radius smaller than the minimum bending radius of the drop cable 2 as a whole (namely, the drop cable 2 with optical module 20, yarns 24 and external sheath 23). Indeed, the bending losses of the optical fibers 21 comprised in the bent drop cable 2 are mainly due to the mechanical stresses exerted on the optical fibers 21 by the outer layer(s) 22, 23, 24. By removing at least one of such outer layers 22, 23, 24, the bending loss component due to the mechanical stresses exerted by the removed layer(s) is avoided, and accordingly the minimum bending radius of the drop cable 2 is decreased.

In particular, if both the external sheath 23 and the yarns 24 are removed from the portion 26 of drop cable extra-length (thereby exposing the optical module 20), the minimum bending radius of such portion 26 of drop cable extra-length is substantially equal to the minimum bending radius of the optical module 20. The minimum bending radius of the optical module 20 is however about 1/10 the minimum bending radius of the complete drop cable 2. Accordingly, the portion 26 of drop cable extra-length from which the external sheath 23 and the yarns 24 have been removed may be wound to form a coil whose minimum diameter D2 (see Figure 3) depends on the minimum bending radius of the optical module 20 and is therefore about 1/10 the diameter D1 of the drop cable 2 coiled in the disposable box before installation.

In particular, since (as discussed above) the minimum bending radius of the optical module 20 is smaller than 50 mm, more preferably smaller than 20 mm, the coiled portion 26 of the drop cable extra-length preferably has a minimum diameter D2 smaller than 100 mm, more preferably smaller than 40 mm. According to the above mentioned advantageous embodiment, wherein the optical module 20 comprises a bend-insensitive single-mode optical fiber 21 compliant with the ITU-T Recommendation G.657 A, the bending radius of the optical module 20 is equal to about 10 mm. Accordingly, the diameter D2 is smaller than about 20 mm.

This advantageously allows providing a very small storage box 4. Indeed, in order to be suitable for housing the coiled portion 26 of drop cable extra-length, the storage box 4 may be just larger than the diameter D2. For instance, the storage box 4 may have a size smaller than 100 mm in its larger dimension, preferably smaller than 40 mm, more preferably smaller than 20 mm. The storage box 4 is therefore particularly suitable for use in FTTH networks, since its compactness eases its installation in narrow spaces typically available at the user's premises and minimizes its aesthetic impact.

The storage box 4 is finally closed and, preferably, sealed for preventing possible tampering or accidental opening thereof. The installation of the drop cable 2 is thus complete.

The above described installation procedure has a number of advantages. First of all, the extra-length of the drop cable 2 may be stored in a box (namely, the storage box 4) whose size is small enough to comply with the requirements on devices for FTTH networks, the drop cable extra-length being bendable at a substantially reduced bending radius. Further, no splices are required during the installation procedure, both ends of the drop cable 2 being preconnectorized. Further, the drop cable 2 is easily laid in the duct, the optical connector terminating its free end having size and shape optimized for easing pulling through the duct. The installation of the optical termination assembly 1 may be therefore carried out very quickly and easily also by not experienced operators.

## Claims

1. A method for installing a drop cable (2) for an optical access network in a building, said drop cable (2) having a first end (2a), a second end (2b) and a first minimum bending radius, said drop cable (2) comprising at least one optical fiber (21) and one or more layers (22, 23, 24) surrounding said optical fiber (21), said method comprising:
a) laying said drop cable (2) so that said first end (2a) is housed in a termination box (3) placed at a first position at user's premises within said building and said second end (2b) is brought to a second position close to a riser cable (6) within said building;
b) collecting an extra-length of said drop cable (2) at a third position intermediate between said first position and said second position;
c) removing at least one (23, 24) of said layers (22, 23, 24) from a portion (26) of said extra-length of said drop cable (2); and
d) coiling said portion (26) with a bending radius smaller than said first minimum bending radius,
said method further comprising placing a storage box (4) at said third position and accommodating said coiled portion (26) in said storage box (4).

2. The method according to claim 1 wherein, at said step d), said bending radius is substantially 1/10 of said first minimum bending radius.

3. The method according to any of the preceding claims, wherein said step c) comprises cutting one (23) of said layers (22, 23, 24) at a longitudinal position, accessing a rip cord (25) housed in said layer (23) and pulling said rip cord (25) thereby longitudinally slicing said layer (23) for a length substantially equivalent to said extra-length of the drop cable (2).

4. An optical access network comprising an optical termination assembly (1), a riser cable (6) and a riser box (5), said optical termination assembly (1) comprising:
- a termination box (3) placed at a first position at user's premises;
- a drop cable (2) comprising at least one optical fiber (21) and one or more layers (22, 23, 24) surrounding said optical fiber (21), said drop cable having a first end (2a) housed in said termination box (3), a second end (2b) placed in a second position close to a riser cable (6), and a first minimum bending radius, the second end (2b) of said drop cable (2) being connected to said riser cable (6) within said riser box (5); and
- a storage box (4) placed in a third position intermediate between said first position and said second position,
wherein said drop cable (2) comprises an extra-length lacking, in at least one portion thereof, of at least one (23, 24) of said layers (22, 23, 24), said portion (26) being coiled in said storage box (4) with a bending radius smaller than said first minimum bending radius.

5. The optical access network according to claim 4, wherein said drop cable (2) comprises at least one preconnectorized end.

6. The optical access network according to claim 5, wherein said first end (2a) of said drop cable (2) is preconnectorized.

7. The optical access network according to claim 6, wherein said first end (2a) of said drop cable (2) is inserted in said termination box (3) before deploying of said drop cable (2).

8. The optical access network according to any of claims 5 to 7, wherein said second end (2b) of said drop cable (2) is preconnectorized.

9. The optical access network according to claim 8, wherein said second end (2b) of said drop cable (2) is provided with an optical connector (20b) having an outer diameter not larger than an external diameter of said drop cable (2).

10. The optical access network according to any of claims 4 to 9, wherein said drop cable (2) further comprises a buffer tube (22) loosely housing said optical fiber (21) so as to form an optical module (20), said optical module (20) having a second minimum bending radius.

11. The optical access network according to claim 10, wherein said second minimum bending radius is smaller than said first minimum bending radius.

12. The optical access network according to claim 11, wherein said second minimum bending radius is substantially 1/10 of said first minimum bending radius.

13. The optical access network according any of claims 10 to 13, wherein said storage box (4) has its larger dimension substantially equal to the double of said second minimum bending radius.

14. The optical access network according to any of claims 4 to 13, wherein said drop cable (2) further comprises at least one rip cord (25) arranged between said optical fiber (21) and said at least one (23, 24) of said layers (22, 23, 24) for easing removal of said at least one (23, 24) of said layers (22, 23, 24).

## Patentansprüche

1. Verfahren zum Installieren eines Anschlusskabels (2) für ein optisches Zugangsnetz in einem Gebäude, wobei das Anschlusskabel (2) ein erstes Ende (2a), ein zweites Ende (2b) und einen ersten minimalen Biegeradius aufweist, wobei das Anschlusskabel (2) mindestens eine optische Faser (21) und eine oder mehrere Schichten (22, 23, 24) umfasst, die die optische Faser (21) umgeben, wobei das Verfahren umfasst:
a) Verlegen des Anschlusskabels (2), sodass das erste Ende (2a) in einem Anschlusskasten (3) untergebracht wird, der sich an einer ersten Position in den Räumlichkeiten des Benutzers innerhalb des Gebäudes befindet, und das zweite Ende (2b) an eine zweite Position in der Nähe eines Steigkabels (6) innerhalb des Gebäudes gebracht wird;
b) Sammeln einer Überlänge des Anschlusskabels (2) an einer dritten Position zwischen der ersten Position und der zweiten Position;
c) Entfernen mindestens einer (23, 24) der Schichten (22, 23, 24) von einem Abschnitt (26) der Überlänge des Anschlusskabels (2); und
d) Aufwickeln des Abschnitts (26) mit einem Biegeradius, der kleiner ist als der erste minimale Biegeradius, wobei das Verfahren ferner das Platzieren einer Aufbewahrungsbox (4) an der dritten Position und das Aufnehmen des aufgewickelten Abschnitts (26) in der Aufbewahrungsbox (4) umfasst.

2. Verfahren nach Anspruch 1, wobei im Schritt d) der Biegeradius im Wesentlichen 1/10 des ersten minimalen Biegeradius beträgt.

3. Verfahren nach einem der vorhergehenden Ansprüche, wobei der Schritt c) das Schneiden einer (23) der Schichten (22, 23, 24) an einer Längsposition, den Zugang zu einer Reißleine (25), die in der Schicht (23) untergebracht ist, und das Ziehen der Reißleine (25) umfasst, wodurch die Schicht (23) in Längsrichtung über eine Länge aufgeschnitten wird, die im Wesentlichen der Überlänge des Anschlusskabels (2) entspricht.

4. Optisches Zugangsnetz mit einer optischen Abschlussanordnung (1), einem Steigkabel (6) und einer Steigdose (5), wobei die optische Abschlussanordnung (1) Folgendes umfasst:
- eine Abschlussdose (3), die an einer ersten Position am Standort des Benutzers angeordnet ist;
- ein Anschlusskabel (2), das mindestens eine optische Faser (21) und eine oder mehrere Schichten (22, 23, 24) umfasst, die die optische Faser (21) umgeben, wobei das Anschlusskabel ein erstes Ende (2a), das in dem Anschlusskasten (3) untergebracht ist, ein zweites Ende (2b), das in einer zweiten Position in der Nähe eines Steigkabels (6) angeordnet ist, und einen ersten Mindestbiegeradius aufweist, wobei das zweite Ende (2b) des Anschlusskabels (2) mit dem Steigkabel (6) innerhalb des Steigkastens (5) verbunden ist; und
- einen Aufbewahrungskasten (4), der in einer dritten Position zwischen der ersten Position und der zweiten Position angeordnet ist, wobei das Anschlusskabel (2) eine Überlänge aufweist, die in mindestens einem Abschnitt von mindestens einer (23, 24) der Schichten (22, 23, 24) fehlt, wobei der Abschnitt (26) in dem Aufbewahrungskasten (4) mit einem Biegeradius aufgewickelt ist, der kleiner als der erste minimale Biegeradius ist.

5. Optisches Zugangsnetz nach Anspruch 4, wobei das Anschlusskabel (2) mindestens ein vorverbundenes Ende aufweist.

6. Optisches Zugangsnetz nach Anspruch 5, wobei das erste Ende (2a) des Anschlusskabels (2) vorverbunden ist.

7. Optisches Zugangsnetz nach Anspruch 6, wobei das erste Ende (2a) des Anschlusskabels (2) vor dem Einsetzen des Anschlusskabels (2) in die Abschlussbox (3) eingefügt wird.

8. Optisches Zugangsnetz nach einem der Ansprüche 5 bis 7, wobei das zweite Ende (2b) des Anschlusskabels (2) vorverbunden ist.

9. Optisches Zugangsnetz nach Anspruch 8, wobei das zweite Ende (2b) des Anschlusskabels (2) mit einem optischen Stecker (20b) versehen ist, dessen Außendurchmesser nicht größer ist als der Außendurchmesser des Anschlusskabels (2).

10. Optisches Zugangsnetz nach einem der Ansprüche 4 bis 9, wobei das Anschlusskabel (2) ferner ein Pufferrohr (22) umfasst, in dem die optische Faser (21) lose untergebracht ist, um ein optisches Modul (20) zu bilden, wobei das optische Modul (20) einen zweiten Mindestbiegeradius aufweist.

11. Optisches Zugangsnetz nach Anspruch 10, wobei der zweite Mindestbiegeradius kleiner ist als der erste Mindestbiegeradius.

12. Optisches Zugangsnetz nach Anspruch 11, wobei der zweite Mindestbiegeradius im Wesentlichen 1/10 des ersten Mindestbiegeradius beträgt.

13. Optisches Zugangsnetz nach einem der Ansprüche 10 bis 13, wobei die größere Abmessung des Speicherkastens (4) im Wesentlichen gleich dem Doppelten des zweiten Mindestbiegeradius ist.

14. Optisches Zugangsnetz nach einem der Ansprüche 4 bis 13, wobei das Anschlusskabel (2) ferner mindestens eine Reißleine (25) aufweist, die zwischen der optischen Faser (21) und der mindestens einen (23, 24) der Schichten (22, 23, 24) angeordnet ist, um das Entfernen der mindestens einen (23, 24) der Schichten (22, 23, 24) zu erleichtern.

## Revendications

1. Procédé d'installation d'un câble de branchement (2) pour un réseau d'accès optique dans un bâtiment, ledit câble de branchement (2) ayant une première extrémité (2a), une seconde extrémité (2b) et un premier rayon de courbure minimal, ledit câble de branchement (2) comprenant au moins une fibre optique (21) et une ou plusieurs couches (22, 23, 24) entourant ladite fibre optique (21), ledit procédé comprenant :
a) la pose dudit câble de branchement (2) de telle sorte que ladite première extrémité (2a) est logée dans un boîtier de terminaison (3) placée à un premier emplacement au niveau de locaux d'utilisateur à l'intérieur dudit bâtiment et ladite seconde extrémité (2b) est amenée à un deuxième emplacement proche d'un câble colonne montante (6) à l'intérieur dudit bâtiment ;
b) la collecte d'une sur-longueur dudit câble de branchement (2) au niveau d'un troisième emplacement intermédiaire entre ledit premier emplacement et ledit deuxième emplacement ;
c) le retrait d'au moins une (23, 24) desdites couches (22, 23, 24) d'une partie (26) de ladite sur-longueur dudit câble de branchement (2) ; et
d) l'enroulement de ladite partie (26) avec un rayon de courbure plus petit que ledit premier rayon de courbure minimal,
ledit procédé comprenant en outre le placement d'un boîtier de stockage (4) au niveau dudit troisième emplacement et le logement de ladite partie (26) enroulée dans ledit boîtier de stockage (4).

2. Procédé selon la revendication 1, dans lequel, à ladite étape d), ledit rayon de courbure est sensiblement 1/10 dudit premier rayon de courbure minimal.

3. Procédé selon l'une quelconque des revendications précédentes, dans lequel ladite étape c) comprend la découpe d'une (23) desdites couches (22, 23, 24) à un emplacement longitudinal, l'accès à un fil de déchirement (25) logé dans ladite couche (23) et la traction sur ledit fil de déchirement (25) de façon à trancher longitudinalement ladite couche (23) sur une longueur sensiblement équivalente à ladite sur-longueur du câble de branchement (2).

4. Réseau d'accès optique comprenant un ensemble de terminaison optique (1), un câble colonne montante (6) et un boîtier de colonne montante (5), ledit ensemble de terminaison optique (1) comprenant :
- un boîtier de terminaison (3) placée à un premier emplacement au niveau des locaux d'utilisateur ;
- un câble de branchement (2) comprenant au moins une fibre optique (21) et une ou plusieurs couches (22, 23, 24) entourant ladite fibre optique (21), ledit câble de branchement ayant une première extrémité (2a) logée dans ledit boîtier de terminaison (3), une seconde extrémité (2b) placée à un deuxième emplacement proche d'un câble colonne montante (6), et un premier rayon de courbure minimal, la seconde extrémité (2b) dudit câble de branchement (2) étant connectée audit câble colonne montante (6) à l'intérieur dudit boîtier de colonne montante (5) ; et
- un boîtier de stockage (4) placée à un troisième emplacement intermédiaire entre ledit premier emplacement et ledit deuxième emplacement,
dans lequel ledit câble de branchement (2) comprend un manque de sur-longueur, dans au moins une partie de celui-ci, d'au moins une (23, 24) desdites couches (22, 23, 24), ladite partie (26) étant enroulée dans ledit boîtier de stockage (4) avec un rayon de courbure plus petit que ledit premier rayon de courbure minimal.

5. Réseau d'accès optique selon la revendication 4, dans lequel ledit câble de branchement (2) comprend au moins une extrémité pré-équipée de connecteur.

6. Réseau d'accès optique selon la revendication 5, dans lequel ladite première extrémité (2a) dudit câble de branchement (2) est pré-équipée de connecteur.

7. Réseau d'accès optique selon la revendication 6, dans lequel ladite première extrémité (2a) dudit câble de branchement (2) est insérée dans ledit boîtier de terminaison (3) avant le déploiement dudit câble de branchement (2).

8. Réseau d'accès optique selon l'une quelconque des revendications 5 à 7, dans lequel ladite seconde extrémité (2b) dudit câble de branchement (2) est pré-équipée de connecteur.

9. Réseau d'accès optique selon la revendication 8, dans lequel ladite seconde extrémité (2b) dudit câble de branchement (2) est équipée d'un connecteur optique (20b) ayant un diamètre extérieur non supérieur à un diamètre extérieur dudit câble de branchement (2).

10. Réseau d'accès optique selon l'une quelconque des revendications 4 à 9, dans lequel ledit câble de branchement (2) comprend en outre une gaine intermédiaire (22) logeant de manière lâche ladite fibre optique (21) de façon à former un module optique (20), ledit module optique (20) ayant un second rayon de courbure minimal.

11. Réseau d'accès optique selon la revendication 10, dans lequel ledit second rayon de courbure minimal est plus petit que ledit premier rayon de courbure minimal.

12. Réseau d'accès optique selon la revendication 11, dans lequel ledit second rayon de courbure minimal est sensiblement 1/10 dudit premier rayon de courbure minimal.

13. Réseau d'accès optique selon l'une quelconque des revendications 10 à 13, dans lequel ledit boîtier de stockage (4) a sa plus grande dimension sensiblement égale au double dudit second rayon de courbure minimal.

14. Réseau d'accès optique selon l'une quelconque des revendications 4 à 13, dans lequel ledit câble de branchement (2) comprend en outre au moins un fil de déchirement (25) agencé entre ladite fibre optique (21) et ladite au moins une (23, 24) desdites couches (22, 23, 24) pour faciliter un retrait de ladite au moins une (23, 24) desdites couches (22, 23, 24).
